# EUROPEAN PATENT SPECIFICATION

(11) **EP 4 253 774 B1**
(45) Date of publication and mention of the grant of the patent: **28.01.2026**
(21) Application number: 22164687.0
(22) Date of filing: 28.03.2022
(51) Int. Cl.: F16B 41/00, F16B 23/00

(54) **ANTI-THEFT LOCKING DEVICE FOR A VEHICLE WHEEL**
DIEBSTAHLSICHERUNG FÜR EIN FAHRZEUGRAD
DISPOSITIF DE VERROUILLAGE ANTIVOL POUR UNE ROUE DE VÉHICULE

(43) Date of publication of application: 04.10.2023
(73) Proprietor: Groppo, Matteo, 12040 Sanfre' (CN) (IT); Groppo, Lazzaro, 12040 Sanfre' (CN) (IT)
(72) Inventor: Groppo, Matteo, 12040 Sanfre' (CN) (IT); Groppo, Lazzaro, 12040 Sanfre' (CN) (IT)
(74) Representative: Robba, Pierpaolo

(56) References cited:
- EP-A1- 2 816 244
- US-A- 3 241 408
- US-A1- 2016 361 947
- US-A1- 2019 113 065

## Description

### Technical Field

The present invention relates to an anti-theft locking device for a vehicle wheel, of the kind made as a nut or a bolt, provided with a female or a male thread, respectively.

### Prior Art

Anti-theft locking devices for locking vehicle wheels are known in the art. Such devices are made as threaded nuts or as bolts having a threaded stem, depending on the manner they are mounted on the hub of the vehicle wheel.

In both cases, usually the anti-theft locking device cannot be rotated by means of a conventional tool such as for instance a fixed or adjustable wrench, and it requires instead an interface member arranged between the device and the conventional tool. The interface member is generally provided with a usually hexagonal engagement head for engagement of the conventional tool, such as a fixed wrench. The locking device and the interface member are equipped with corresponding, mutually co-operating coupling means so that, when the interface member is coupled to the device, the rotation of the interface member causes a corresponding rotation of the anti-theft device.

Still according to the prior art, the coupling means can consist of an annular groove, either continuous i.e. having no interruptions along its annular extension or interrupted i.e. having at least one interruption, of various shapes, formed in the device on a surface provided for that purpose, and of a corresponding complementary projection provided on the interface member. A guide portion is often provided on the anti-theft device for facilitating the engagement of the interface member on the device and the consequent insertion of the coupling means.

Some known devices are provided with a guide portion comprising a rotatable bushing, idly mounted on the device so that it cannot be easily detached from the device itself. The rotatable bushing prevents the guide portion from being gripped and rotated by means of a conventional tool, for instance a fixed wrench or a plier. The device can therefore be rotated only by acting on the interface member, which engages the anti-theft device thanks to the coupling means.

Examples of anti-theft devices made as nuts or bolts, especially for vehicle wheels, are described for instance in IT 1.279.160, US 3.241.408, EP 1369602, EP 2816244 and WO 03/081057.

An example of fastening screw provided with a non-standard groove with triangular geometrical shape id disclosed in US 6186718 B1.

The need to have an anti-theft locking device for a vehicle wheel available, which device offers a high degree of protection against theft attempts while being capable of being manufactured in a cost-convenient way, is strongly felt in the field.

The devices equipped with a coupling groove are generally mass-produced and they comprise a proprietary groove, made according to a predetermined pattern, allowing obtaining a limited number of different patterns, generally some ten different patterns for each device model. Clearly, should it be possible to have available all proprietary actuating wrenches corresponding to the different groove patterns, it would be possible to act on all devices of a given model, or even on all devices of a given manufacturer. A very high number of groove patterns, and a corresponding equally high number of complementary actuating wrenches, would make occurrence of said risk more difficult. Yet, the reduced size of the device and the need to form the groove on a suitable surface, sufficiently resistant to withstand the concerned torques, make attaining more than some ten patterns for each device model extremely difficult.

It is a first object of the invention to provide a solution to the problem of how to increase the number of different patterns for the coupling groove of an anti-theft locking device for vehicle wheels.

It is another object of the invention to provide a solution to the above problem, by providing an anti-theft locking device that can be made either as a threaded nut or as a bolt having a threaded stem.

It is a further, but not the last object of the invention to provide a device of the aforesaid type that can be made quickly and, therefore, is suitable for large-scale industrial production.

### Disclosure of the Invention

The anti-theft locking device for a vehicle wheel according to the invention mainly comprises a cylindrical metal body provided with an engagement portion in turn having a female or a male thread, depending on whether said device is made as a nut or as a bolt. The device body comprises first coupling means for engagement with an interface member or actuating wrench. The actuating wrench, which is not part of the claimed invention, is in turn provided with complementary second coupling means, co-operating with said first coupling means for rotating the locking device when the wrench is rotated. The first coupling means provided on the device comprise an annular groove, which may be continuous or interrupted, and the second coupling means comprise a complementary axial projection.

Advantageously, according to the invention, the first coupling means have a width "d" equal to or more preferably smaller than 2 mm.

In accordance with the invention, the first coupling means are formed on an annular portion or flange of the device body, protruding radially outwards relative to the device body. Said annular portion constitutes a corresponding abutment plane for a complementary proprietary actuating wrench, which plane develops circumferentially around the device body and perpendicularly to longitudinal axis "S" thereof. The annular groove for coupling the proprietary wrench by means of which the device can be rotated for obtaining the locking and unlocking of the wheel relative to a vehicle hub is provided inside said annular band, i.e. on said abutment plane. Said annular band, substantially corresponding to the surface of the abutment plane, corresponds to the usable area for obtaining the annular groove and is less than 5 mm wide, preferably less than 3 mm wide, mainly for aesthetical reasons.

Still according to the invention, the groove has a depth of at least 2 mm, so as to ensure an equally considerable extent of penetration for the projection of the interface and a consequent reliable and rigid mutual engagement of the anti-theft device and the interface member.

The groove formed on the annular band has a profile with several changes of direction, preferably at least four changes of direction and more preferably at least ten changes of direction.

Advantageously, according to the invention, by making a sufficiently narrow coupling groove for the proprietary wrench, it is possible to better exploit the space available for said proprietary wrench on the band of the abutment plane and to obtain a very high number of mutually different grooves, thereby increasing the number of different combinations available to the manufacturers for the coupling between the wrench and the device.

### Brief Description of the Figures

Some preferred embodiments of the invention will be provided by way of non-limiting examples with reference to the accompanying Figures, in which:
- Fig. 1 is a top plan view of an anti-theft locking device according to the invention, made as a nut;
- Fig. 2 is a top plan view of an actuating wrench for the device shown in Fig. 1;
- Fig. 3 is an exploded view in longitudinal section taken along planes A-A and B-B, respectively, of an anti-theft locking device according to the invention, made as a nut, and of the corresponding actuating wrench;
- Fig. 4 is a top plan view of an anti-theft locking device according to the invention, made as a bolt;
- Fig. 5 is a top plan view of an actuating wrench for the device shown in Fig. 4;
- Fig. 6 is an exploded view in longitudinal section taken along planes A-A and B-B, respectively, of an anti-theft locking device according to the invention, made as a bolt, and of the corresponding actuating wrench;

### Description of Some Preferred Embodiments of the Invention

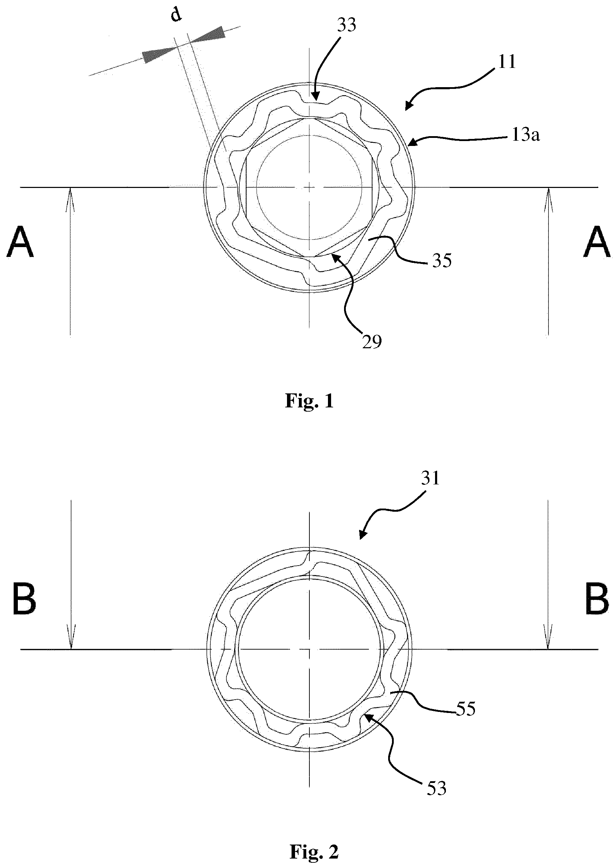

Referring to Figs. 1 to 3, a first preferred embodiment of the invention is shown, in which locking device 11 is made as a threaded nut 13a.

Nut 13a comprises a metal body with cylindrical shape, in which an engagement portion 15 is defined, capable of threadedly engaging a stud bolt provided in the hub of a vehicle wheel. In the illustrated embodiment, engagement portion 15 consists of a threaded hole 17, axially extending over at least part of the body of nut 13a. Said threaded hole 17 has an opening 19, located at base 21 of the cylindrical body of nut 13a, for insertion of the stud bolt. Moreover, in this embodiment, said hole 17 is a blind hole, i.e. it does not pass right through the body of nut 13a, and is therefore closed at one end. In other embodiments, hole 17 could be made as a through hole.

Said base 21 forms the abutment surface for abutment of nut 13a against the surface of the rim of the vehicle wheel when device 11 is in its mounted condition. According to the illustrated embodiment, base 21 is surrounded by a conical surface 23a, which gives the desired shape to base 21 of the nut in order to avoid damaging the surface of the wheel rim when device 11 is in its mounted condition.

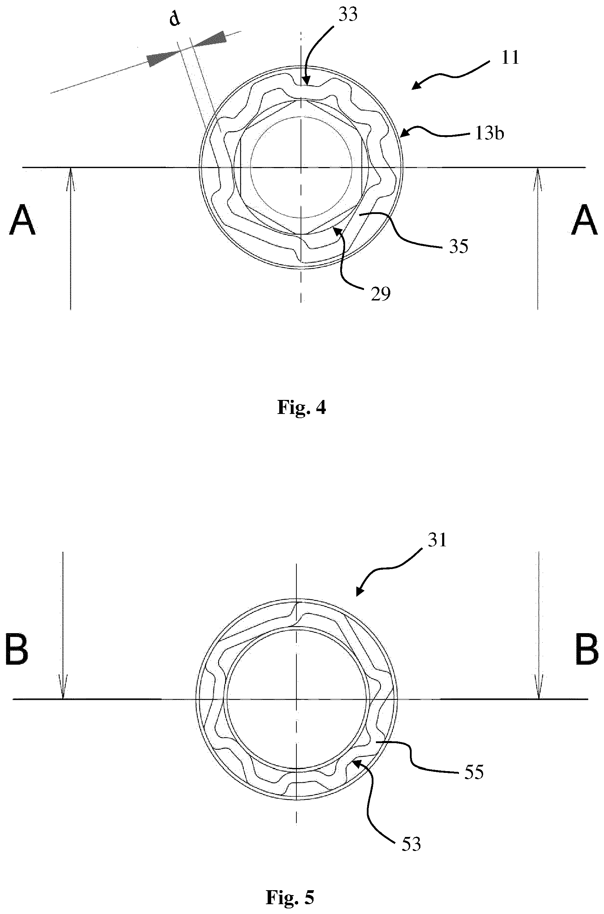

Referring to Figs. 4 to 6, a second preferred embodiment of locking device 11 is shown, in which the device is made as a bolt 13b. Bolt 13b includes a metal body with cylindrical shape in which an engagement portion 15 is defined, capable of threadedly engaging a threaded hole provided in the hub of the vehicle wheel. In the illustrated embodiment, engagement portion 15 consists of a threaded stem 25, axially extending over the body of bolt 13b, starting from base 27 of the cylindrical body of bolt 13b. In the illustrated embodiment, a member 23b axially bored and crimped on the outer surface of bolt 13b is associated with base 27 in order to confer the desired shape to base 27 and to avoid damaging the surface of the wheel rim when device 11 is in its mounted condition.

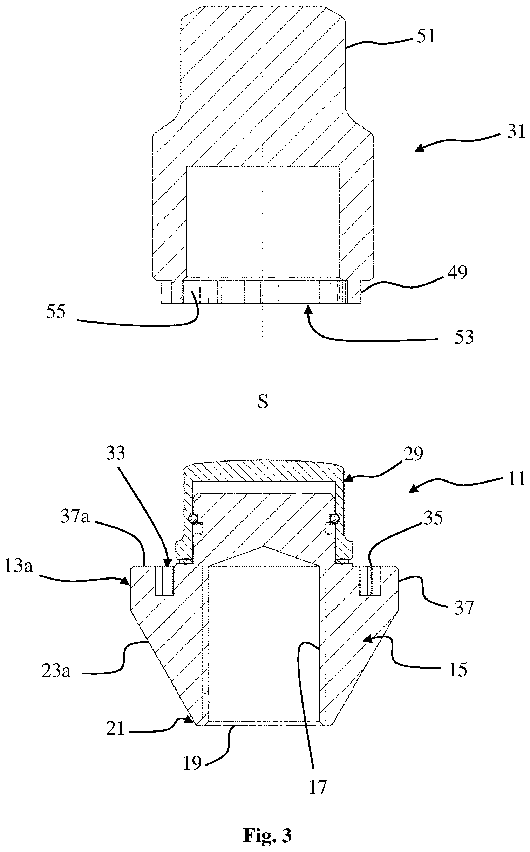

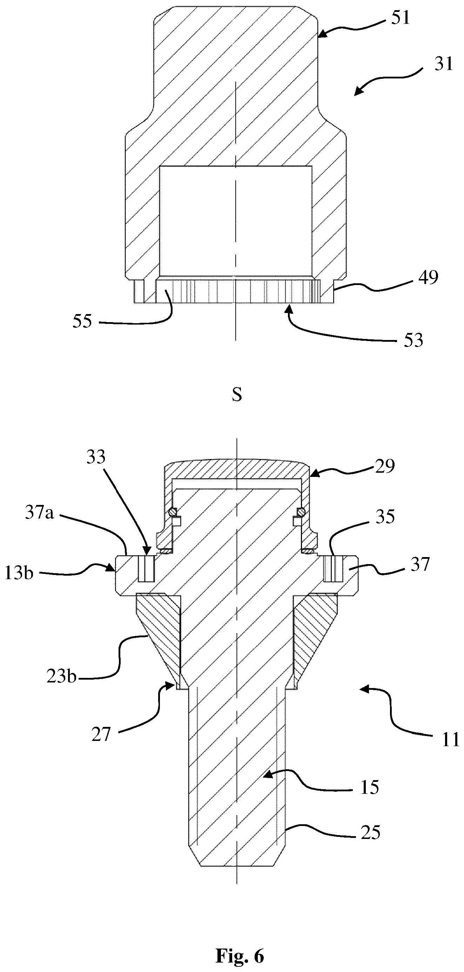

Referring now to Figs. 3 and 6, according to the invention a guide portion 29 for an interface member 31 is provided, by which device 11 can be rotated and which will be described below. The guide portion axially extends within the cylindrical body of device 11, on the opposite side with respect to engagement portion 15. The illustrated device 11 further comprises first coupling means 33 for said interface member 31, which in turn is provided with complementary second coupling means 35. In the illustrated embodiment, guide portion 29 is at least partially surrounded by said first coupling means 33. In the illustrated exemplary embodiment, said first coupling means 33 comprise an annular groove 35 surrounding guide portion 29, without interruptions in the illustrated example. Still referring to the embodiments depicted in the accompanying Figures, furthermore said first coupling means 33 are obtained on an annular portion or flange 37 of the body of device 11, which annular portion projects radially outwards relative to guide portion 29, which in turn axially extends from said annular portion 37. Said annular portion 37 therefore defines a corresponding abutment plane 37a for interface member 31, as it will become more apparent from the following description, and annular groove 35 is advantageously obtained on said abutment plane 37a, which extends circumferentially around guide portion 29a and perpendicularly to longitudinal axis "S" of device 11.

The radial extension of flange 37 amounts to few millimetres, since device 11 is to meet severe aesthetical and mechanical criteria set by the manufacturers of the wheel rims and of the vehicles. The annular band corresponding to the surface of abutment plane 37a therefore has a width of few millimetres, typically less than 5 mm and equal to 3 mm in the illustrated example, and corresponds to the usable area for obtaining annular groove 35 defining the anti-theft proprietary pattern, that is the pattern intended to engage a corresponding proprietary projection in the interface member, or proprietary actuating wrench 31. More preferably, the radial width of annular band i.e. abutment plane 37a, measured along the perpendicular to the internal and external tangents of groove 35, is about twice the width of groove 35. This width of annular band 37a is optimal for defining a plurality of grooves 35 of different shapes and allows giving a sufficient robustness to flange 37.

Advantageously, according to the invention, groove 35 has a very small width "d", equal to or preferably smaller than 2 mm measured along the perpendicular to the internal and external tangents of the groove. Advantageously, according to the invention, thanks to this very small width of the groove, it is possible to exploit the limited surface available in the annular band to define a very high number of patterns for the anti-theft groove. More particularly, thanks to the fact that the groove has a very small width, it is possible to provide, in each pattern of the anti-theft groove, a corresponding path exhibiting several changes of direction, even with very accentuated angles, up to 90°. According to this embodiment of the invention, groove 35 advantageously further has a considerable depth, of at least 2 mm, so as to ensure an equally considerable penetration for the projection of interface 31 and a consequent reliable and rigid mutual engagement of members 11 and 31.

Still with reference to Figs. 3 and 6, interface member 31 comprises a cylindrical hollow body open at one end 49 and provided at its opposite end with an engagement portion 51 for engagement of a conventional tool, such as a fixed or adjustable wrench or a plier. In the illustrated embodiment, engagement portion 51 has a hexagonal cross-section and axially extends over a length sufficient for allowing engagement with a complementary hexagonal wrench for rotating interface member 31. The opening provided at end 49 comprises second coupling means 53 surrounding said opening and comprising, in the illustrated embodiment, an annular projection 55 intended to engage the corresponding annular groove 35 provided in device 11. Advantageously, the width of projection 55, measured along the perpendicular to the internal and external tangents of the projection, will be slightly smaller than width "d" of groove 35, so as to allow an easy insertion of projection 55 into groove 35 and, at the same time, the stable engagement between interface member 31 and anti-theft device 11.

The anti-theft device for locking a vehicle wheel as described and illustrated can undergo several changes and modifications falling within the same inventive principle, as set out in the appended claims.

## Claims

1. An anti-theft locking device (11) for a vehicle wheel, comprising a cylindrical metal body provided with an engagement portion (15) having a female or male thread, depending on whether said device (11) is made as a nut (13a) or a bolt (13b), wherein said body comprises first coupling means (33) for engagement with an interface member (31) by which the device (11) can be rotated,
- wherein a guide portion (29) for said interface member (31) which axially extends within the cylindrical body of the device (11) is provided on the side opposite to the engagement portion (15), and wherein said coupling means (33) are provided on an annular portion or flange (37) of the body of the device (11) protruding radially outwards relative to the guide portion (29), which in turn axially extends from said annular portion (37), said annular portion (37) forming a corresponding abutment plane (37a) for the interface member (31), and wherein the annular groove (35) is provided on said abutment plane (37a), which develops circumferentially around the guide portion (29) and perpendicularly to the longitudinal axis "S" of the device (11);
- wherein said first coupling means (33) comprise an annular groove (35), **characterized in that** said first coupling means (33) have a width "d" smaller than or equal to 2 mm, **in that** the annular flange (37) corresponding to the surface of the abutment plane (37a) corresponds to the usable area for obtaining the annular groove (35) and has a width smaller than 5 mm and **in that** the groove has a depth of at least 2 mm, so as to ensure an equally considerable extent of penetration for a projection of the interface and a consequent reliable and rigid mutual engagement of the anti-theft device and the interface member.

2. The device according to claim 1, wherein the radial width of the abutment plane (37a) is about twice the width of the groove (35).

3. The device according to claim 1 or 2, wherein the engagement portion (15) consists of a threaded hole (17) axially extending over at least part of the body of the nut (13a), said threaded hole (17) comprising an opening (19) arranged at a base (21) of the cylindrical body of the nut (13a).

4. The device according to claim 1 or 2, wherein the engagement portion (15) consists of a threaded stem (25) axially extending over the body of the bolt (13b) starting from a base (27) of the cylindrical body of the bolt (13b).

5. The device according to claim 1, wherein the annular groove (35) has a width "d" smaller than 2 mm, measured along the perpendicular to the internal and external tangents of the groove (35).

6. The device according to any one of the preceding claims, wherein the annular groove (35) comprises at least one interruption.

7. The device according to any one of the preceding claims, wherein the annular groove (35) has a profile with several changes of direction.

8. The device according to claim 7, wherein the annular groove (35) has a profile with at least four changes of direction.

9. The device according to claim 7, wherein the annular groove (35) has a profile with at least ten changes of direction.

## Patentansprüche

1. Diebstahlsicherung (11) für ein Fahrzeugrad, mit einem zylindrischen Metallkörper, der mit einem Eingriffsabschnitt (15) versehen ist, der abhängig davon, ob die Vorrichtung als eine Mutter oder ein Bolzen ausgebildet ist, ein männliches oder weibliches Gewinde aufweist, wobei der Körper erste Kopplungsmittel (33) zum Eingriff mit einem Zwischenteil (31) aufweist, mit dem die Vorrichtung (11) gedreht werden kann,
- wobei ein Führungsabschnitt (29) für das Zwischenteil (31), der sich axial in dem zylindrischen Körper der Vorrichtung (11) erstreckt, an der dem Eingriffsabschnitt (15) gegenüberliegenden Seite vorgesehen ist, und wobei die Kopplungsmittel (33) an einem ringförmigen Abschnitt oder Flansch (37) des Körpers der Vorrichtung (11) vorgesehen sind, der relativ zu dem Führungsabschnitt (29) radial auswärts absteht, der seinerseits axial von dem kreisförmigen Abschnitt (37) aus erstreckt, wobei der ringförmige Abschnitt (37) eine entsprechende Anlageebene (37a) für das Zwischenteil (31) bildet, und wobei die kreisförmige Nut (35) an der Anlageebene (37a) ausgebildet ist, die sich umlaufend um den Führungsabschnitt (29) und senkrecht zu der Längsachse "S" der Vorrichtung (11) erstreckt,
- wobei die ersten Kopplungsmittel (33) eine ringförmige Nut (35) aufweisen, **dadurch gekennzeichnet, dass** die ersten Kopplungsmittel (33) eine Breite "d" haben, die kleiner oder gleich 2 mm ist, dass der kreisförmige Flansch (37), welcher der Oberfläche der Anlageebene (37a) entspricht, der nutzbaren Fläche zum Erhalten der ringförmigen Nut (35) entspricht und eine Breite von weniger als 5 mm hat und, dass die Nut eine Tiefe von wenigstens 2 mm hat, um einen entsprechend beträchtliches Eindringen für eine Projektion der Verbindungsfläche und eine entsprechend zuverlässige und feste wechselseitige Verbindung der Diebstahlvorrichtung und des Zwischenteils zu gewährleisten.

2. Vorrichtung nach Anspruch 1, wobei die radiale Breite der Anlageebene (37a) etwa die doppelte Breite der Nut (35) ist.

3. Vorrichtung nach Anspruch 1 oder 2, wobei der Eingriffsabschnitt (15) aus einer Gewindebohrung (37) besteht, die sich axial über zumindest einen Teil des Körpers der Mutter (13a) erstreckt, wobei die Gewindebohrung (17) eine Öffnung (19) aufweist, die an einer Basis des zylindrischen Körpers der Mutter (13a) angeordnet ist.

4. Vorrichtung nach Anspruch 1 oder 2, wobei der Eingriffsabschnitt (15) einen Gewindebolzen (25) aufweist, der sich axial über den Körper der Schraube (13b) erstreckt und von einer Basis (27) des zylindrischen Körpers des Bolzens (13b) ausgeht.

5. Vorrichtung nach Anspruch 1, wobei die ringförmige Nut (35) eine Breite "d" von weniger als 2 mm hat, gemessen entlang der Senkrechten zu den internen und externen Tangenten der Nut (35).

6. Vorrichtung nach einem der vorstehenden Ansprüche, wobei die ringförmige Nut (35) wenigstens eine Unterbrechung aufweist.

7. Vorrichtung nach einem der vorstehenden Ansprüche, wobei die ringförmige Nut (35) ein Profil mit mehreren Richtungswechseln aufweist.

8. Vorrichtung nach Anspruch 7, wobei die ringförmige Nut (35) ein Profil mit wenigstens 4 Richtungswechseln aufweist.

9. Vorrichtung nach Anspruch 7, wobei die ringförmige Nut (35) ein Profil mit wenigstens 10 Richtungswechseln aufweist.

## Revendications

1. Dispositif de verrouillage antivol (11) pour une roue de véhicule, comprenant un corps métallique cylindrique pourvu d'une partie de mise en prise (15) ayant un filetage femelle ou mâle, selon que ledit dispositif (11) est réalisé sous forme d'écrou (13a) ou de vis (13b), dans lequel ledit corps comprend un premier moyen de couplage (33) pour la mise en prise avec un élément d'interface (31) par lequel le dispositif (11) peut être tourné,
- dans lequel une partie de guidage (29) pour ledit élément d'interface (31) qui s'étend axialement à l'intérieur du corps cylindrique du dispositif (11) est prévue sur le côté opposé à la partie de mise en prise (15), et dans lequel lesdits moyens de couplage (33) sont prévus sur une partie annulaire ou une bride (37) du corps du dispositif (11) faisant saillie radialement vers l'extérieur par rapport à la partie de guidage (29), qui à son tour s'étend axialement à partir de ladite partie annulaire (37), ladite partie annulaire (37) formant un plan de butée (37a) correspondant pour l'élément d'interface (31), et dans lequel la rainure annulaire (35) est prévue sur ledit plan de butée (37a), qui s'étend circonférentiellement autour de la partie de guidage (29) et perpendiculairement à l'axe longitudinal « S » du dispositif (11) ;
- dans lequel lesdits premiers moyens de couplage (33) comprennent une rainure annulaire (35),
**caractérisée en ce que** lesdits premiers moyens de couplage (33) présentent une largeur « d » inférieure ou égale à 2 mm, **en ce que** la bride annulaire (37) correspondant à la surface du plan de butée (37a) correspond à la zone utilisable pour obtenir la rainure annulaire (35) et présente une largeur inférieure à 5 mm et **en ce que** la rainure présente une profondeur d'au moins 2 mm, afin d'assurer une pénétration équitablement considérable pour une projection de l'interface et en conséquence une mise en prise mutuelle fiable et rigide du dispositif antivol et de l'élément d'interface.

2. Dispositif selon la revendication 1, dans lequel la largeur radiale du plan de butée (37a) est environ deux fois la largeur de la rainure (35).

3. Dispositif selon la revendication 1 ou 2, dans lequel la partie de mise en prise (15) consiste en un trou fileté (17) s'étendant axialement sur au moins une partie du corps de l'écrou (13a), ledit trou fileté (17) comprenant une ouverture (19) disposée à une base (21) du corps cylindrique de l'écrou (13a).

4. Dispositif selon la revendication 1 ou 2, dans lequel la partie de mise en prise (15) consiste en une tige filetée (25) s'étendant axialement sur le corps de la vis (13b) à partir d'une base (27) du corps cylindrique de la vis (13b).

5. Dispositif selon la revendication 1, dans lequel la rainure annulaire (35) présente une largeur « d » inférieure à 2 mm, mesurée le long de la perpendiculaire aux tangentes interne et externe de la rainure (35).

6. Dispositif selon l'une quelconque des revendications précédentes, dans lequel la rainure annulaire (35) comprend au moins une interruption.

7. Dispositif selon l'une quelconque des revendications précédentes, dans lequel la rainure annulaire (35) présente un profil à plusieurs changements de direction.

8. Dispositif selon la revendication 7, dans lequel la rainure annulaire (35) présente un profil avec au moins quatre changements de direction.

9. Dispositif selon la revendication 7, dans lequel la rainure annulaire (35) présente un profil avec au moins dix changements de direction.
